# EUROPEAN PATENT SPECIFICATION

(11) **EP 4 654 754 B1**
(45) Date of publication and mention of the grant of the patent: **06.05.2026**
(21) Application number: 24177221.9
(22) Date of filing: 22.05.2024
(51) Int. Cl.: H05B 47/18, G06F 8/65

(54) **INTELLIGENT FIRMWARE UPDATE TOOL**
INTELLIGENTES FIRMWARE-AKTUALISIERUNGSWERKZEUG
OUTIL DE MISE À JOUR DE MICROLOGICIEL INTELLIGENT

(43) Date of publication of application: 26.11.2025
(73) Proprietor: Tridonic GmbH & Co KG, 6851 Dornbirn (AT)
(72) Inventor: Netzer, Harald, 6851 Dornbirn (AT); Kucera, Clemens, 6851 Dornbirn (AT)
(74) Representative: Beder, Jens

(56) References cited:
- EP-A1- 3 855 871
- US-A1- 2013 205 288
- US-A1- 2017 364 348

## Description

The invention is in the field of lighting systems, light driver devices, lighting control and lighting management. The invention in particular concerns a method for updating firmware of devices of the lighting system.

Contemporary building infrastructure systems include a plurality of infrastructure devices, arrange them all over a building and connect the individual infrastructure devices with a control bus for communicating messages between the infrastructure devices for controlling the building infrastructure system.

A typical example for an infrastructure system is a lighting system that uses a control bus for controlling the individual devices of the lighting system, which may include luminaires and control devices, e.g., ambient light sensors, presence sensors, push-button devices, dimming devices, and lighting servers. The control bus of the lighting system may operate according to a standard from the series of technical standards known as Digital Addressable Lighting Interface (DALI^{RTM}) standardized in IEC 62386, and known as DALI, DALI-2, and D4i.

A DALI control bus comprises at least one application controller and bus power supply, sometimes in form of a dedicated device. More often, at least the bus power supply is arranged integrated with another device of the lighting system, e.g. in a light driver device equipped with a DALI interface. The application controller may configure, query, and control each device on the control bus via a bi-directional data exchange. Multiple application controllers may coexist on the same control bus.

The DALI interface, or more generally, the control bus interface and the devices of the infrastructure system often include firmware for implementing specific functionalities of the device and the infrastructure system via software in a versatile manner. Updating the firmware of the devices of the infrastructure system distributed all over the building via the existing control bus connecting the devices of the infrastructure system offers significant advantages in terms of cost and time.

However, updating the firmware of the devices of the infrastructure system via the control bus results in a problem occurs if intending to update the firmware of a device including the control bus interface with the integrated bus power supply. In temporary implementations of the firmware update function in infrastructure devices, the device software ceases running when a firmware update process starts running. In consequence, the control of the internal bus power supply of device may also stop operating and ceases to supply the control bus. The result is a lockout situation, as the bus power supply ceases to supply the control bus due to a program code that controls, e.g. a Flyback converter providing the control bus voltage not being executed any more in firmware update mode. The update process cannot continue due to the missing control bus power.

EP 3 855 871 A1, US 2017/364348 A1 and US 2013/205288 A1 relate to methods for performing a firmware update of devices in a lighting system.

It is an object of the invention to improve the updating processes of devices of a lighting system via a control bus.

The method for updating firmware of devices of a lighting system according to independent claim 1, the program and the computer-readable medium according to the corresponding independent claims 14 and 15, respectively, provide advantageous solutions to the aforementioned problem.

The dependent claims define further advantageous embodiments.

The first aspect concerns a method for updating firmware of devices of a lighting system, wherein the lighting system comprises a control bus for connecting a plurality of the devices, and at least one device includes a bus power supply for supplying the control bus. The lighting system performs the update of the firmware of the devices via the control bus. The method includes steps of acquiring information on the at least one bus power supply from the plurality of devices via the control bus, and selecting devices of the plurality of devices based on the acquired information. The selected devices exclude at least one of the devices of the plurality of devices that includes the bus power supply outputting a supply current to the control bus. The method then updates the firmware of the selected devices of the plurality of devices.

The method presents an intelligent firmware update tool. On start of the firmware update process for the devices of the lighting system, the method scans all the devices of the lighting system connected to the control bus. The method provides the framework for acquiring information from all the internal bus power supplies of all connected devices present of the bus. Based on the information obtained from the bus power supplies by the scan and the queries, the method selects devices that do not supply the control bus with power for the update, ensuring that during an update process always at least one bus power supply remains enabled, in particular providing a supply current for supplying the bus. The update process then will proceed smoothly at least with regard to the power supply of the control bus used for the update of the firmware of the devices connected to the control bus.

The method also provides an automated procedure for a firmware update of the devices of the lighting system that reduces the workload for maintenance personnel significantly, as the method does reduce the need for human resources for planning the update in order to ensure that the update process is not suddenly terminated due to a sudden failure of the control bus originating in a loss of power.

According to an embodiment of the method for updating firmware, the method comprises switching selectively, via the control bus, the bus power supply of devices of the plurality of devices between a state in which the bus power supply is enabled to output a supply current to the control bus and a state in which the bus power supply is disabled.

Hence, the method may automatically control the bus power supply of devices switching between and ON-state (enabled state) of the bus power supply and an OFF-state (disabled state) of the bus power supply. When in an enabled state, a bus power supply provides a bus supply current to the control bus. When in a disabled state, the bus power supply provides no bus supply current to the control bus, and therefore may undergo the firmware update process. Thereby, the method may enable to select different bus power supplies for providing the bus supply current for the control bus for different times during the firmware update process, and ensure that all devices have the possibility to execute the firmware update process while another device with a bus power supply provides the bus supply current for the control bus.

The method for updating firmware according to an embodiment comprises acquiring the information on the at least one bus power supply from the plurality of devices that includes information on at least one of presence, state, and current output power of the at least one bus power supply.

Information on the presence of the bus power supply of a device specifies in particular whether the device of the lighting system includes a bus power supply or does not include a bus power supply.

Information on the state of the bus power supply of a device specifies in particular whether the bus power supply of the device of the lighting system is in an enabled state, in particular providing a bus supply current to the control bus, or is in a disabled state. In the disabled state the bus power supply provides no bus supply current, corresponding to providing a bus supply current of 0 mA to the control bus.

Information on the output power of the bus power supply specifies in a current output power, a minimum output power and/or maximum output power of the bus power supply.

Hence, the control method acquires relevant technical parameters that enable to plan and perform the firmware update process for the devices such that the update process via the control bus has a continuous supply current for the control bus available, executes without failure due to a control bus failure due to a power supply failure of the control bus, and is performed for as much devices of the lighting system as possible. The control method acquires the technical parameters via the control bus in an entirely automated manner without requiring input from a user concerning system structure and additional information on the individual devices of the lighting system connected to the control bus.

The method for updating firmware according an embodiment comprises determining a difference between the number of the selected devices and the number of the plurality of devices of the lighting system based on the acquired information on the at least one bus power supply, and in case of the determined difference being equal or smaller than one, the method generates information requesting use of an external power supply device for the control bus and outputting the generated information via a human machine interface to a user.

Hence, the method automatically determines based on the information acquired via the control bus from the devices of the lighting system, whether an additional external bus power supply is required for updating the firmware of all devices, and guides the user to acquire such external bus power supply and connect it with the control bus. The burden on a user is minimized to the essential tasks in which only he may contribute to the successful execution of the firmware update process for all the devices of the lighting system.

According to an embodiment, the method for updating firmware comprises a step of determining a total output power of the devices excluding the selected devices of the plurality of devices based on the acquired information on the at least one bus power supply. In case of determining that the determined total output power is smaller than a predetermined minimum power, the method performs a step of generating information requesting use of an external power supply device for the control bus and outputting the generated information via a human machine interface to a user.

The predetermined minimum power corresponds to a minimum power level required for driving the control bus within a power range defined by an applicable bus standard for the control bus.

Hence, the method automatically determines based on the information acquired via the control bus from the devices of the lighting system, whether an additional external bus power supply is required for updating the firmware of all devices in order to ensure sufficient supply power for the control bus during the firmware update process. The method thereby guides the user to acquire such external bus power supply and connect it with the control bus in case the available bus supply current by the devices excluding the selected devices is determined as insufficient.

In an embodiment, the method for updating firmware comprises, in the step of selecting devices of the plurality of devices based on the acquired information, determining a first group of selected devices and at least one second group of selected devices based on the acquired information. Each of the first and the at least one second group of selected devices comprise at least one device that include the bus power supply. Each of the first and the at least one second group of selected devices exclude at least one of the devices of the plurality of devices that includes the bus power supply. The step of updating includes updating respectively the firmware of the first group of selected devices and the at least one second group of selected devices of the plurality of devices time-sequentially.

Hence, the method may automatically plan the firmware update process of the devices while simultaneously ensuring that the firmware update process is executed for as many devices as possible.

The method for updating firmware according to an embodiment comprises switching selectively the bus power supply of the selected devices of the first group of selected devices and the at least one second group of selected devices into an enabled state and a disabled state via the control bus for controlling updating the firmware of the first group of selected devices and the at least one second group of selected devices time-sequentially.

Hence, the method may automatically executes the firmware update process of the devices while simultaneously ensuring that the required actions from a user are minimized.

According to an embodiment, the method for updating firmware comprises determining based on information on the at least bus power supply whether an electric current output by the at least bus power supply exceeds the maximum current specified for the control bus.

Hence, the method may ensure that values of the bus supply current never exceed electric current values that exceed current levels, which may harm or even destroy electronic circuitry and electric components of the bus interfaces of the devices of the lighting system, although the firmware update process runs automatically.

In an embodiment of the method for updating firmware, the information on the at least one bus power supply comprises information on the number of bus power supplies of the lighting system and an electric current output by individual bus power supplies of the bus power supplies.

Hence, the method acquires the technical parameters of the installed lighting system that enable planning the firmware update process and ensuring that the planned firmware update process runs automatically without undesired failure of the control bus during the firmware update process.

According to an embodiment of the method for updating firmware, acquiring the information on the at least one bus power supply via the control bus includes acquiring information on a maximum power or a maximum current output by individual bus power supplies of the bus power supplies.

Hence, the method may ensure that values of the bus supply current never exceed electric current values that exceed current levels, which may harm or even destroy electronic circuitry and electric components of the bus interfaces of the devices of the lighting system. On the other hand, the method may ensure that the values of the bus supply current always suffice during the firmware update process for maintaining the control bus fully functional although the firmware update process runs automatically.

The method for updating firmware according to an embodiment comprises the information on the at least one bus power supply from the plurality of devices including identification information of a type of at least one of individual devices of the plurality of devices and the at least one bus power supply; the method comprises associating the acquired identification information with information on the type of at least one of individual devices of the plurality of devices and the at least one bus power supply stored in a look-up table.

Hence, the data size of the information on the bus power supply acquired from the devices is reduced to type information of limited number of types only. The necessary data rate on the control bus required for implementing the method is therefore advantageously small.

According to an embodiment, the method for updating firmware comprises the plurality of devices includes plural light driver devices each including a control bus interface, and the at least one control bus interface of the plural light driver devices comprises the bus power supply.

The method enables a updating the firmware of installed light driver devices distributed over a building using the regularly available lighting control bus interfaces without having to access each light driver device using a dedicated interface of the light driver device in an individual firmware update process for each light driver device.

The control bus may in particular include a lighting control bus according to at least one DALI series standard.

Hence, the lighting control bus according to the DALI standard may be used for the additional functionality of reliably updating the light driver devices after installation.

The computer program according to the second aspect comprises instructions, which, when a computer executes the computer program, cause the computer to carry out the method according to the first aspect.

The computer-readable storage medium having stored thereon the computer program of the second aspect.

The following description of embodiments refers to the figures, in which
Fig. 1 displays a simplified block diagram of a lighting system according to prior art,
Fig. 2 shows a flowchart illustrating steps of a method for updating firmware of devices of a lighting system in an embodiment;
Fig. 3 provides an overview over the architecture of a lighting system in an application of the method for updating firmware of devices of the lighting system; and
Fig. 4 displays further exemplary application of the method for updating firmware of devices of the lighting system.

In the figures, corresponding elements have the same reference signs. The discussion of the figures avoids discussion of same reference signs in different figures wherever considered possible without adversely affecting comprehensibility and avoiding unnecessary repetitions for sake of conciseness.

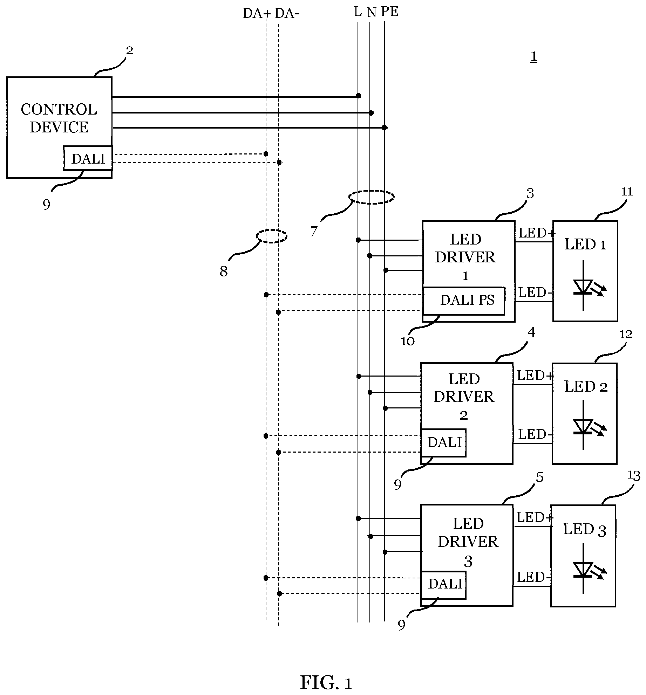

Fig. 1 displays a simplified block diagram of a lighting system 1 according to prior art.

The lighting system 1 is a specific example for an infrastructure system or building infrastructure system. The lighting system 1 comprises a control bus 8 according to the DALI standard for connecting the individual devices of the lighting system 1 using their respective DALI interfaces 9, 10.

The infrastructure system may include other infrastructure systems than the lighting system 1 depicted in fig. 1. The infrastructure system may, e.g. include at least one of a HVAC system, a route guidance system, an emergency guidance system, and a fire alarm system for citing further examples of building infrastructure systems.

The lighting system 1 shown in fig. 1 includes a control device 2. The control device 2 may comprise, e.g., a push-button device, a sensor, a dimming device, a lighting server.

The control device 2 may include e.g., a DALI controller that is supplied by the control bus 8 or, optionally and as depicted in fig. 1, by the mains grid 7, and controls three light driver devices 3, 4, 5 connected by the control bus 8 with the control device 2.

The lighting system of fig. 1 comprises the three light driver devices 3, 4, 5. The light driver devices 3, 4, 5 of fig. 1 each generate and output a load current, in particular, a LED current I_LED to at least one lighting module 11, 12, 13. The LED current I_LED is a DC current supplying at least one, usually even a plurality of LEDs of the lighting modules 11, 12, 13, which the lighting modules 11, 12, 13 each arrange in series, in parallel, or in a combination of series and parallel circuit topology.

The control device 2 controls light emission of the lighting modules 11, 12, 13 by control signals provided via the control bus 8 to the light driver devices 3, 4, 5.

The light driver devices 3, 4, 5 and the control device 2 each include a communication interface in form of the bus interface 9 or the bus interface 10. The bus interfaces enable transmitting and receiving communication signals via the control bus 8 in a wired communication network. The wired communication network may operate based on at least one of a DALI network standard, DALI 2 network standard, DALI+ network standard, DiiA network standard, D4i network standard, KNX network standard, ProfiNet network standard, ProfiBus network standard or corresponding standards in the technical fields of building infrastructure systems, lighting systems, communication systems, and smart home systems.

The control bus 8 of fig. 1 complies with the regulation concerning the electric current on the bus according to the DALI standard. The electrical specifications of the DALI standard for lighting control defines a two-wire bus with a maximum current of 250 mA on the control bus, a maximum current of 2 mA per device connected to the control bus 8, a maximum voltage of 22.5 V_{DC}, and typical signal voltage of 16 V_{DC} for the control bus 8.

In the exemplary DALI installation of the lighting system 1 of fig. 1, one light driver device 3 of the plural light driver devices 3, 4, 5 has an enabled internal bus power supply in their bus interface 10. The enabled internal bus power supply of the light driver device 3 provides a bus supply current for supplying the control bus 8.

The respective bus interfaces 9 of the light driver devices 4, 5 and of the control device 2 of the lighting system 1 depicted in fig. 1 have no internal bus power supply.

The control device 2 and the driver devices 3, 4, 5 of fig. 1 each have a mains interface not explicitly shown in fig. 1 for connecting the control device 2 and driver devices 3, 4, 5 with the mains grid 7 (AC mains grid 7). The mains grid 7 supplies the control device 2 and the driver devices 3, 4, 5 with a mains supply current I_MAINS at a mains supply voltage V_MAINS.

The light driver devices 3, 4, 5 and the control device 2 each include a control circuit not explicitly illustrated in fig. 1, which may in turn comprise at least one of a microcontroller and an ASIC. The control circuit of the driver devices 3, 4, 5 includes also a memory providing data storage capacity for storing information. The memory may form part of the microcontroller or be separate from the microcontroller. The control circuit performs at least some of the functions of the light driver devices 3, 4, 5 and the control device 2 by running a firmware (main software) stored in the memory.

The light driver devices 3, 4, 5 and the control device 2 may additionally include an interface control circuit in the bus interface 9, 10, which controls communication of the respective device via the control bus. The control circuit performs at least some of the functions of the bus interfaces 9, 10 by running a firmware (interface software) stored in an interface memory.

Alternatively, the main software may also control the functions of the bus interfaces 9, 10 by running a firmware (main software) stored in the memory.

The firmware of the light driver devices 3, 4, 5, the control device 2, and the bus interfaces 9, 10 is updated via the bus interfaces 9, 10 and the control bus 8. Hence, updating the firmware does neither require a separate physical interface integrated with each of the devices, nor an additional communication network in parallel to the control bus 8, nor a user accessing each device at its respective location in the building individually.

The lighting system 1 includes the light driver devices 3, 4, 5 comprising a function that allows updating the firmware of the light driver devices 3, 4, 5 via the control bus 8. An exemplary lighting system 1 that does not make use of an external bus power supply could look as shown in **Fehler! Verweisquelle konnte nicht gefunden werden..** In the illustrated lighting system 1, the light driver device 3 powers the control bus 8 by its internal bus power supplying the bus interface 10.

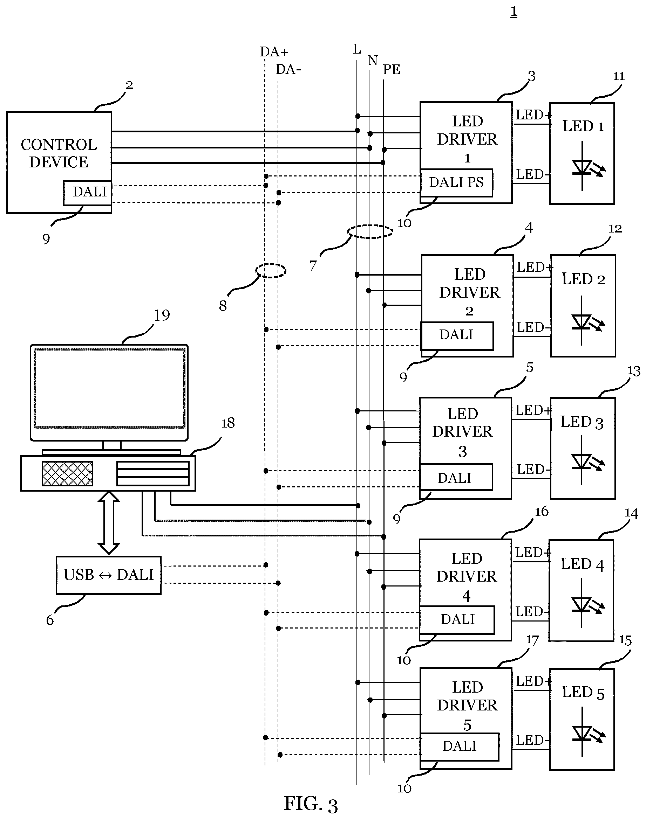

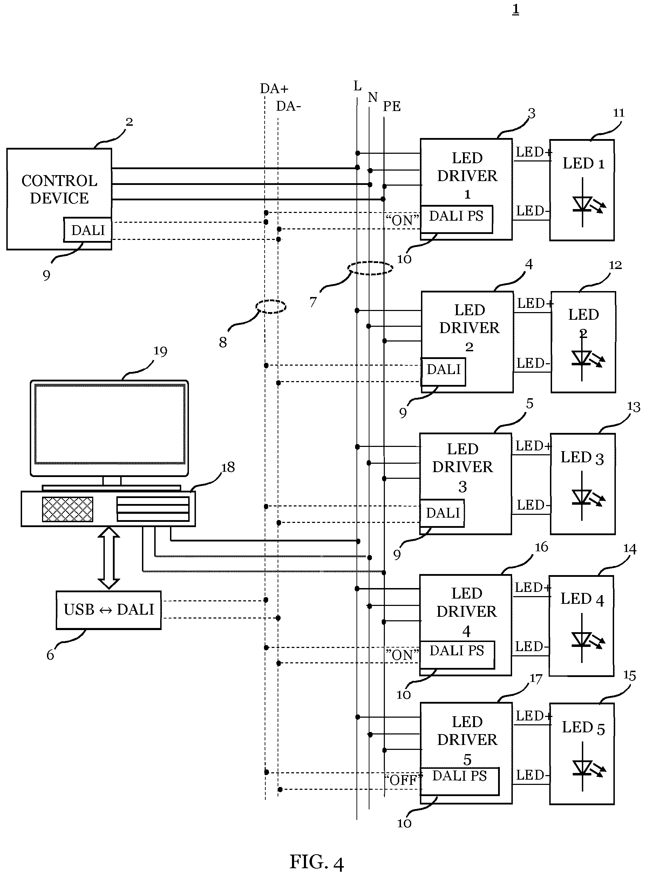

A computer 18 running a firmware update tool not shown in fig. 1 may be connected to the control bus 8, e.g. as illustrated in figs. 3 and 4, using, e.g., a USB-DALI converter module 6 in a scenario in which the control bus is a DALI bus. Updating the firmware of the control device 2 as well as of the light driver devices 4, 5 of the lighting system 1 of fig. 1 may be performed without problems due to the power supply provided by the light driver device 3 and its bus interface 10. However, a problem occurs if intending to update the firmware of light driver device 3. Currently, in typical implementations of the firmware update function in light driver devices, the main software of the current light driver devices 3, 4, 5 ceases running when a firmware update process by the current firmware update tool is started. In consequence, the control of the internal bus power supply of the bus interface 10 of the light driver device 3 may also stop operating and supplying the control bus 8. The result is that a lockout situation occurs, as the bus power supply of light driver device 3 ceases to supply the control bus 8. This may originate due to a program code of the main software that controls, e.g., a Flyback converter providing the control bus voltage in the internal bus power supply ceasing to run when the light driver device 10 switches into a firmware update mode.

Therefore, in the current scenario, the update process cannot continue due to the missing control bus power in the firmware update mode. Existing approaches for avoiding the lockout situation may include either modifying the software of the light driver device 3 in order to have the bus power supply of the bus interface 10 running too when the light driver device 3 is operating in the firmware update mode. Alternatively, updating the firmware of the light driver device 3 may include connecting an external bus power supply not shown in fig. 1 to the control bus 8 at least for the time the updating process of the firmware is running.

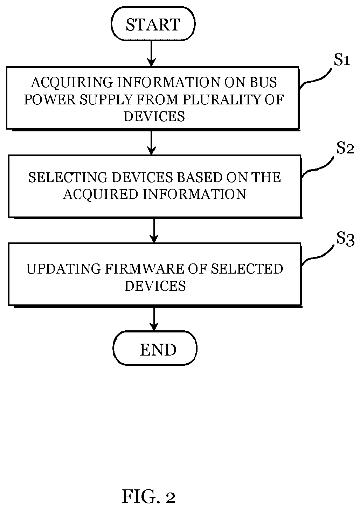

The invention proposes another solution to the problem by using by an intelligent firmware update tool as proposed in the invention, which is discussed with reference to figs. 2, 3, and 4 in detail.

Fig. 2 shows a flowchart illustrating steps of a method for updating firmware of devices 2, 3, 4, 5, 16, 17 of a lighting system 1 in an embodiment.

The lighting system 1 comprises a control bus 8 for connecting a plurality of the devices 2, 3, 4, 5, 16, 17, and at least one device 2, 3, 4, 5, 16, 17 includes a bus power supply for supplying the control bus, as illustrated, e.g. in the lighting system 1 of any one of figs. 1, 3, and 4.

The lighting system 1 performs the update of the firmware of the devices 2, 3, 4, 5, 16, 17 via the control bus 8.

The method starts with a step S1 (scanning step S1) of acquiring information on the at least one bus power supply from the plurality of devices 2, 3, 4, 5, 16, 17 via the control bus 8.

In the particular embodiment of fig. 2, the method acquires the information on the at least one bus power supply from the plurality of devices 2, 3, 4, 5, 16, 17 including information on at least one of presence of the at least one bus power supply on the control bus 8, a current state of the at least one bus power supply on the control bus 8, and a current output power or electric current provided by the at least one bus power supply to the control bus 8.

The information on the at least one bus power supply may comprise information on the number of bus power supplies of the lighting system 1 and an electric current output by individual bus power supplies of all the bus power supplies.

The information on the at least one bus power supply from the plurality of devices 2, 3, 4, 5, 16, 17 may include identification information of a type of at least one of individual devices 2, 3, 4, 5, 16, 17 of the plurality of devices 2, 3, 4, 5, 16, 17 and the at least one bus power supply.

The method then proceeds with a step S2 (selecting step S2) of selecting devices 2, 3, 4, 5, 16, 17 of the plurality of devices 2, 3, 4, 5, 16, 17 based on the acquired information on the at least one bus power supply. The selected devices 2, 3, 4, 5, 16, 17 in step S2 exclude at least one of the devices 2, 3, 4, 5, 16, 17 of the plurality of devices 2, 3, 4, 5, 16, 17 that includes the bus power supply outputting a supply current to the control bus 8.

In step S3 (updating step S3), following to step S2, the method updates the firmware of the selected devices 2, 3, 4, 5, 16, 17 of the plurality of devices 2, 3, 4, 5, 16, 17.

Fig. 3 provides an overview over the architecture of a lighting system 1 in an application of the method for updating firmware of devices 2, 3, 4, 5, 16, 17 of the lighting system 1.

Fig. 3 represents a specific state of the current installation of the lighting system 1 that is determined based on the result of a scanning step S1. The scanning step S1 includes acquiring information on the at least one bus power supply from the plurality of devices 2, 3, 4, 5, 16, 17 via the control bus 8.

The lighting system 1 of fig. 3 includes a plurality of light driver devices 3, 4, 5, 16, 17, each light driver device 3, 4, 5, 16, 17 provides a load current I_{LED} to a respective lighting module 11, 12, 13, 14, 15 connected via connections LED+ and LED- with a respective light driver devices 3, 4, 5, 16, 17.

The lighting system 1 further includes a single control device 2. The control device 2 and the light driver devices 3, 4, 5, 16, 17 are all connected via a control bus 8, which in the depicted example is a lighting control bus according to the DALI standard.

A computer 18 is connected via a USB-DALI converter module 6 to the control bus 8. The computer 18 provides a hardware platform for running application software including a firmware update tool including a method for updating firmware according to an embodiment comprising at least the steps discussed with reference to fig. 2.

The computer 18 may comprise a storage medium, in particular a storage medium separable storage medium, e.g. an USB device, storing program information including a firmware update software for managing and updating the firmware of devices connected to the computer 18. The firmware update software (firmware update tool) includes an implementation of the method for updating the firmware of devices via the control bus 8 according to an embodiment.

The computer 18 includes typically at least one processor, memory means for storing program code and application data, and input/output means for communicating with a user. The input/output means may include at least one display 19 (monitor 19) for displaying visually information to the user. The input/output means typically also includes a keyboard, pointing devices, microphone for citing some particular examples for receiving an input from the user, and loudspeakers and/or headphones for outputting information acoustically to the user.

The application data stored in the memory means may include at least one look-up table.

In an embodiment, the information on the at least one bus power supply from the plurality of devices 2, 3, 4, 5, 16, 17 includes identification information of a type of at least one of individual devices 2, 3, 4, 5, 16, 17 of the plurality of devices 2, 3, 4, 5, 16, 17 and the at least one bus power supply. The look-up table stores the identification information of a plurality of type of devices 2, 3, 4, 5, 16, 17 associated with respective technical parameters of the type of devices 2, 3, 4, 5, 16, 17. The firmware update tool, may, in the scanning step S1, proceed with associating the acquired identification information from the devices 2, 3, 4, 5, 16, 17 with information on the type of at least one of the devices 2, 3, 4, 5, 16, 17 of the plurality of devices 2, 3, 4, 5, 16, 17 in the look-up table. The firmware update tool then retrieves the associated technical parameters from the look-up table for a subsequent evaluation, and in particular, the selecting step S2.

The technical parameter may include in particular, a maximum bus supply current that the internal bus power supply of the bus interface 10 of the particular device 3, 16, 17 is able to output.

The technical parameter may include in particular, whether or not the bus interface 9, 10 of the device 2, 3, 4, 5, 16, 17 comprises an internal bus power supply.

The computer 18 may implement a human machine interface (HMI) for interaction with the user when executing the application software running on the computer 18.

In particular, the computer 18 may implement the HMI for interacting with the user when executing the firmware update tool including the method for updating the firmware of the devices 2, 3, 4, 5, 16, 17 of the lighting system 1.

The USB-DALI converter module 6 provides an interface that enables the computer 18, in particular the software of the firmware update tool to communicate with the devices 2, 3, 4, 5, 16, 17 of the lighting system via the control bus 8. The USB-DALI converter module 6 represents a specific example for an USB-control bus converter device that enables the computer 18 to interact with the devices 2, 3, 4, 5, 16, 17 via the control bus 8 by transmitting and receiving communication signals according to the applicable bus standard with the devices 2, 3, 4, 5, 16, 17.

The method implemented on the computer acquires information on the at least one bus power supply from the plurality of devices 2, 3, 4, 5, 16, 17 via the control bus 8.

The acquired information on the at least one bus power supply from the plurality of devices 2, 3, 4, 5, 16, 17 includes information on at least one of presence, state, and current output power of the at least one bus power supply, in particular the internal bus power supply of the bus interface 10.

In the example of fig. 3, the information from the plurality of devices 2, 3, 4, 5, 16, 17 includes information on the presence, state, and current output power of the only bus power supply included in the bus interface 10 of the light driver device 3.

The information from the plurality of devices 2, 3, 4, 5, 16, 17 according to fig. 3 includes information on the absence of any bus power supply included in the bus interfaces 9 of the light driver devices 3, 4, 5, 16, 17 and the control device 2.

The method then proceeds with selecting devices 2, 4, 5, 16, 17 of the plurality of devices 2, 3, 4, 5, 16, 17 based on the acquired information. The selected devices 2, 4, 5, 16, 17 exclude the light driver device 3 of the plurality of devices 2, 3, 4, 5, 16, 17 that includes the bus power supply of the bus interface 10, which outputs a supply current for driving the control bus 8.

The method then updates the firmware of the selected devices 2, 4, 5, 16, 17 of the plurality of devices 2, 3, 4, 5, 16, 17 via the control bus 8.

Updating of the firmware of the selected devices 2, 4, 5, 16, 17 via the control bus 8 runs without complications as the light driver device 3 provides via its bus interface 10 with the internal bus power supply the required bus supply current for driving the control bus 8.

The light driver device 3 comprises a bus interface 10 as the only source of power for the control bus 8 of the lighting system 1. Preferably, the method for updating firmware implemented as part of the firmware update tool may decide that it needs to inform the user in case the firmware of the light driver device 3 is scheduled for a firmware update also during the firmware update process.

In particular, the method may execute steps of determining a difference between the number of the selected devices 2, 4, 5, 16, 17 and the number of the plurality of devices 2, 3, 4, 5, 16, 17 based on the acquired information on the at least one bus power supply.

In case the determined difference is equal to one or less, the method generates information requesting use of an external power supply device for the control bus 8 and outputting the generated information via the human machine interface of the computer 18, e.g. via visual display of information on the display 19 to the user.

In the example of fig. 3, the method determines the difference being equal to one as only light driver device 3 is not included in the selected devices 2, 4, 5, 16, 17. Therefore, before updating the light driver device 3 can start, the user is prompted via the HMI to connect an additional external bus power supply not explicitly shown in fig. 3 to the control bus 8.

Updating the firmware of the light driver device 3 via the bus interface 10 is then also possible due to the additional external bus power supply providing the necessary bus supply current for driving the control bus 8 during the process of updating the firmware of the devices 2, 3, 4, 5, 16, 17 of the lighting system 1.

In a specific embodiment of the method included in the firmware update tool, the method determines a total output power of the devices 2, 3, 4, 5, 16, 17 of the plurality of devices 2, 3, 4, 5, 16, 17 excluding the selected devices 2, 3, 4, 5, 16, 17 based on the acquired information on the at least one bus power supply. In case of the determined total output power being smaller than a predetermined minimum power for the control bus 8, the method generates information requesting use of an external power supply device for the control bus 8 and outputs the generated information via the HMI to the user.

In a more complex scenario, the installation of the lighting system 1 may show a current state as depicted in fig. 4 of the lighting system 1 with regard to the control bus 8. Fig. 4 illustrates a result of the scanning step S1. In the scanning step S1, the method implemented in the firmware update tool acquires information on the at least one bus power supply from the plurality of devices 2, 3, 4, 5, 16, 17 via the control bus 8.

Fig. 4 illustrates further an exemplary application of the method for updating firmware of devices 2, 3, 4, 5, 16, 17 of the lighting system 1.

The firmware on the five light driver devices 3, 4, 5, 16, 17 of fig. 4 is assumed to be the same and scheduled for a firmware update. An update of all five light driver devices 3, 4, 5, 16, 17 depicted in fig. 4 for the lighting system 1 may be performed in two steps executed time-sequentially one after another.

In the scenario depicted in fig. 4, three light driver devices, in particular the light driver devices 3, 16, and 17 of the lighting system 1 each contain an internal bus power supply as part of their control bus interface 10. Two of the three light driver devices 3, 16, 17, in particular the light driver devices 3 and 16 of the lighting system 1 include the internal bus power supply each in an enabled state, marked "ON" in fig. 4. One of the three light driver devices 3, 16, 17, in particular the light driver device 17 of the lighting system 1, includes the internal bus power supply of the bus interface 10 in a disabled state, marked "OFF" in fig. 4.

In the scenario of fig. 4, the firmware update tool needs to ensure that at least one bus power supply is enabled within a light driver device 3, 16, 17 that is not going to be updated. The firmware update tool, by applying the method according to an embodiment, learns the relevant characteristics, of the connected devices 2, 3, 4, 5, 16, 17 connected to the control bus 8, including the control device 2 and the light driver devices 3, 4, 5, 16, 17, e.g., by reading manufacturer-specific information from each device 2, 3, 4, 5, 16, 17.

The firmware update tool also learns from the acquired information on the bus power supplies what bus supply current each bus power supply arranged internally to the respective control bus interface 10 of each of the light driver devices 3, 16, 17 is able to provide to the control bus 8.

A first requirement for executing a successful firmware updating process is that at least one internal bus power supply of the bus interface 10 of one of the light driver devices 3, 16, 17 remains in the enabled state, ensuring a continuous supply current for the control bus 8.

A second requirement for executing a successful firmware updating process stipulates that actually as many internal bus power supplies of the bus interfaces 10 of the light driver devices 3, 16, 17 remain enabled during the updating process for the firmware as are necessary in order to provide the required minimum supply current for the control bus 8 of the lighting system 1.

For example, the minimum required current may amount to 2mA per device 2, 3, 4, 5, 16, 17 connected to the control bus 8.

In the application scenario of fig. 4, the method includes the selecting step S2 of selecting light driver devices 3, 4, 5, 16, 17 of the plurality of light driver devices 3, 4, 5, 16, 17 based on the acquired information to comprise determining a first group of selected light driver devices 3, 4, 5, 16, 17 and at least one second group of selected light driver devices 3, 4, 5, 16, 17 based on the acquired information on the bus power supply of the bus interfaces 9, 10.

In the scenario of fig. 4, the first group of selected light driver devices 3, 4, 5, 16, 17 includes light driver devices 4, 5, 16, 17. The second group of selected light driver devices 3, 4, 5, 16, 17 includes light driver device 3.

Each of the first group of selected light driver devices 4, 5, 16, 17 and the at least one second group of selected light driver device 3, 4 comprises at least one light device 3, 16, 17 that include the bus power supply in the bus interface 10.

In the scenario of fig. 4, the first group of selected light driver devices 4, 5, 16, 17 comprises the light driver devices 16 and 17 that include the bus power supply in their bus interface 10. The second group of selected light driver device 3 comprises the light driver device 3 that includes the bus power supply in its bus interface 10.

Each of the first and the at least one second group of selected devices 3, 4, 5, 16, 17 exclude at least one of the light driver devices 3, 16, 17 of the plurality of devices 3, 4, 5, 16, 17 that includes the bus power supply in their bus interface 10.

In the scenario of fig. 4, the first group of selected light driver devices 4, 5, 16, 17 excludes the light driver device 3 that include the bus power supply in its bus interface 10. The second group including the selected light driver device 3 excludes the light driver devices 16, 17 that include the bus power supply in their bus interfaces 10.

In the updating step S3, the method proceeds with updating respectively the firmware of the first group of selected light driver devices 4, 5, 16, 17 and the at least one second group of selected light driver device 3 of the plurality of light driver devices 3, 4, 5, 16, 17 time-sequentially. Hence, the method executes in the updating step S3 updating the firmware of the light driver devices 4, 5, 16, 17 first. The bus interface 10 of the light driver device 3 provides the bus supply current in order to maintain an operating control bus 8 for the updating process.

Furthermore, during the updating process for the first group of light driver devices 4, 5, 16, 17, the firmware updating tool switches selectively the bus power supply of the selected light driver devices 4, 5, 16, 17 of the first group into a disabled state, in the scenario of fig. 4 in particular the internal bus power supplies of the bus interfaces 10 of the light driver devices 16, 17. The scanning step S1 revealed, that the internal bus power supply of the bus interface 10 of the light driver devices 17 is already in the disabled state. The internal bus power supply of the bus interface 10 of the light driver devices 16 is actively switched into the disabled state while the firmware of the first group of light driver devices 4, 5, 16, 17 is updated.

After the firmware of the first group of light driver devices 4, 5, 16, 17 is successfully updated, the updating process for the second group including light driver device 3 is executed. The internal bus power supply of the bus interface 10 of the light driver device 3 is actively switched into the disabled state while the firmware of the second group of light driver device 3 is updated. The internal bus power supply of the bus interface 10 of the light driver device 16 is actively switched into the enabled state while the firmware of the second group of light driver device 3 is updated.

Hence, in a first step, in fig. 4, light driver devices 4, 5, 16, and 17 are updated. Simultaneously, light driver device 3 remains operational and continues to provide the supply current to the control bus 8 by maintaining its bus power supply of the bus interface 10 in the enabled state.

Hence, in the first step, the firmware of the light driver device 3 is not yet updated.

In the second step executed after the first step has terminated, the light driver device 16 provides the bus supply current for the control bus 8 by the internal bus power supply of its bus interface 10, while simultaneously the firmware of the light driver device 3 is updated. The method executed during the firmware update process of fig. 4 includes the capability to switch via the control bus 8 an internal bus power supply of the bus interface 10 into the enabled state for providing continuous bus power supply during the firmware update process for which the bus power supply was previously deactivated. In the specific example of fig. 4, this may apply to the bus interface 10 including an internal bus power supply in the disabled state of the light driver device 17.

The firmware update tool switches selectively, via the control bus 8, the bus power supply of devices 3, 16, 17 of the plurality of devices 2, 3, 4, 5, 16, 17 between a state in which the bus power supply is enabled to output a supply current to the control bus 8 and a state, in which the bus power supply is disabled. This enables, e.g., the firmware update tool to perform the firmware update process automatically in plural groups of devices 2, 3, 4, 5, 16, 17, while the necessary power supply for the control bus 8 is always ensured during the update process.

For lighting system 1 comprising a plurality of devices 2, 3, 4, 5, 16, 17, the number of determined groups of selected devices 2, 3, 4, 5, 16, 17 may exceed the first and second group used for illustration purposes when discussing the scenario of fig. 4.

In an alternate embodiment, the method may proceed after the scanning step S1 by storing in the memory of the computer 18 at least an identification of each light driver device 3, 16 of the light driver devices 3, 4, 5, 16, 17, which are determined to include a bus power supply in their interface 10 that is in an enabled state on the control bus 8. The method then disables all the internal bus power supplies of the devices 2, 3, 4, 5, 16, 17 connected to the control bus 8, in particular including the light driver devices 3, 16, which are determined to include internal bus power supplies that are in an enabled state on the control bus 8. The method then proceeds with triggering the user via the HMI, e.g., via generating and displaying respective output information on the monitor 19 to connect an external bus power supply to the control bus 8. The additional time and effort is small, as the DALI-USB converter module 6 anyways needs connecting to the control bus 8.

Subsequently, the updating step S3 of updating the firmware of all connected devices 2, 3, 4, 5, 16, 17 is started, while simultaneously the added external bus power supply provides the bus supply current to the control bus 8. When the update process terminates, in particular terminates successfully, the method proceeds with executing a step of accessing the memory and obtaining the stored identification of devices 2, 3, 4, 5, 16, 17, which the method had originally determined to include bus power supplies that are in an enabled state on the control bus 8.

The method then reinstates the devices 2, 3, 4, 5, 16, 17, in particular the light driver devices 3, 4, 5, 16, 17 and the bus power supplies of the bus interfaces 10 in their original state of the internal bus power supplies based on the retrieved information from the memory.

The method further may ensure that not all bus power supplies of bus interfaces 10 connected to the control bus 8 and enabled at a same time, in sum will output a total bus supply current to the control bus that exceeds a total maximum current specified in the bus standard applicable to the control bus 8 and directing its operation.

For the specific example of a DALI-standardized control bus 8, the maximum total bus supply current is 250mA for the sum of maximum bus supply currents of all bus power supplies connected to the control bus 8.

The method determines in the scanning step S1 how much current each of the internal bus power supplies in the bus interfaces 10 of the light driver devices 3, 16, 17 can provide to the control bus 8. The method may determine the total bus supply current of all enabled bus power supplies based on the acquired information from the light driver devices 3, 16, 17, and the method may further include determining how much current the external bus power supply can deliver.

All steps which are performed by the various entities described in the present disclosure as well as the functionalities described to be performed by the various entities are intended to mean that the respective entity is adapted to or configured to perform the respective steps and functionalities.

In the claims as well as in the description the word "comprising" does not exclude the presence of other elements or steps.

The indefinite article "a" or "an" does not exclude a plurality.

The scope of the invention is defined by the appended claims.

## Claims

1. Method for updating firmware of devices (2, 3, 4, 5, 16, 17) of a lighting system (1),
wherein the lighting system (1) comprises a control bus (8) for connecting a plurality of the devices (2, 3, 4, 5, 16, 17), and at least one device (3, 16, 17) includes a bus power supply for supplying the control bus (8);
wherein the lighting system (1) performs updating of the firmware of the devices (2, 3, 4, 5, 16, 17) via the control bus (8);
and the method includes steps of:
acquiring information on the at least one bus power supply from the plurality of devices (2, 3, 4, 5, 16, 17) via the control bus (8);
selecting devices (2, 3, 4, 5, 16, 17) of the plurality of devices (2, 3, 4, 5, 16, 17) based on the acquired information,
wherein the selected devices (2, 3, 4, 5, 16, 17) exclude at least one of the devices (2, 16, 17) of the plurality of devices (2, 3, 4, 5, 16, 17) that includes the bus power supply outputting a supply current to the control bus (8);
updating the firmware of the selected devices (2, 3, 4, 5, 16, 17) of the plurality of devices (2, 3, 4, 5, 16, 17).

2. Method for updating firmware according to claim 1, wherein the method comprises
switching selectively via the control bus (8) the bus power supply of devices (3, 16, 17) of the plurality of devices (2, 3, 4, 5, 16, 17) between a state in which the bus power supply is enabled to output a supply current to the control bus (8) and a state in which the bus power supply is disabled.

3. Method for updating firmware according to claim 1 or 2, wherein the method comprises
acquiring the information on the at least one bus power supply from the plurality of devices (2, 3, 4, 5, 16, 17) includes information on at least one of presence, state, and current output power of the at least one bus power supply.

4. Method for updating firmware according to one of the preceding claims, wherein the method comprises
determining a difference between the number of the selected devices (2, 3, 4, 5, 16, 17) and the number of the plurality of devices (2, 3, 4, 5, 16, 17) based on the acquired information on the at least one bus power supply, and
in case of the determined difference being equal or smaller than one,
generating information requesting use of an external power supply device for the control bus (8) and outputting the generated information via a human machine interface (19) to a user.

5. Method for updating firmware according to one of the preceding claims, wherein the method comprises
determining a total output power of the devices (2, 3, 4, 5, 16, 17) of the plurality of devices (2, 3, 4, 5, 16, 17) excluding the selected devices (2, 3, 4, 5, 16, 17) based on the acquired information on the at least one bus power supply, and
in case of the determined total output power being smaller than a predetermined minimum power,
generating information requesting use of an external power supply device for the control bus (8) and outputting the generated information via a human machine interface (19) to a user.

6. Method for updating firmware according to one of the preceding claims, wherein the method comprises
selecting devices (2, 3, 4, 5, 16, 17) of the plurality of devices (2, 3, 4, 5, 16, 17) based on the acquired information includes
determining a first group of selected devices (2, 3, 4, 5, 16, 17) and at least one second group of selected devices (2, 3, 4, 5, 16, 17) based on the acquired information,
wherein each of the first and the at least one second group of selected devices (2, 3, 4, 5, 16, 17) comprise at least one device (2, 16, 17) that include the bus power supply, and
wherein each of the first and the at least one second group of selected devices (2, 3, 4, 5, 16, 17) exclude at least one of the devices (2, 16, 17) of the plurality of devices (2, 3, 4, 5, 16, 17) that includes the bus power supply; and
updating respectively the firmware of the first group of selected devices (2, 3, 4, 5, 16, 17) and the at least one second group of selected devices (2, 3, 4, 5, 16, 17) of the plurality of devices (2, 3, 4, 5, 16, 17) time-sequentially.

7. Method for updating firmware according to claim 6, wherein the method comprises
switching selectively the bus power supply of the selected devices (2, 3, 4, 5, 16, 17) of the first group of selected devices (2, 3, 4, 5, 16, 17) and the at least one second group of selected devices (2, 3, 4, 5, 16, 17) into an enabled state and a disabled state via the control bus (8) for controlling updating the firmware of the first group of selected devices (2, 3, 4, 5, 16, 17) and the at least one second group of selected devices (2, 3, 4, 5, 16, 17) time-sequentially.

8. Method for updating firmware according to one of the preceding claims, wherein the method comprises
determining based on information on the at least bus power supply whether an electric current output by the at least bus power supply exceeds the maximum current specified for the control bus (8).

9. Method for updating firmware according to claim 8, wherein
the information on the at least one bus power supply comprises information on the number of bus power supplies of the lighting system (1) and an electric current output by individual bus power supplies of the bus power supplies.

10. Method for updating firmware according to claim 8 or 9, wherein
acquiring the information on the at least one bus power supply via the control bus (8) includes acquiring information on a maximum power or a maximum current output by individual bus power supplies of the bus power supplies.

11. Method for updating firmware according to one of the preceding claims, wherein
information on the at least one bus power supply from the plurality of devices (3, 16, 17) includes identification information of a type of at least one of individual devices (2, 3, 4, 5, 16, 17) of the plurality of devices (2, 3, 4, 5, 16, 17) and the at least one bus power supply; and
the method comprises associating the acquired identification information with information on the type of at least one of individual devices (2, 3, 4, 5, 16, 17) of the plurality of devices (2, 3, 4, 5, 16, 17) and the at least one bus power supply stored in a look-up table.

12. Method for updating firmware according to one of the preceding claims, wherein the method comprises
the plurality of devices (2, 3, 4, 5, 16, 17) includes plural light driver devices (3, 4, 5, 16, 17) each including a control bus interface (9, 10),
wherein at least one control bus interface (10) of the plural light driver devices (3, 4, 5, 16, 17) comprises the at least one bus power supply.

13. Method for updating firmware of devices (2, 3, 4, 5, 16, 17) according to one of the preceding claims, wherein
the control bus (8) includes a lighting control bus (8) according to at least one DALI series standard.

14. A computer program comprising instructions, which, when a computer (18) executes the program, cause the computer (18) to carry out the method of one of the preceding claims.

15. A computer-readable medium having stored thereon the computer program of claim 14.

## Patentansprüche

1. **Verfahren zum Aktualisieren der Firmware von Geräten (2, 3, 4, 5, 16, 17) eines Beleuchtungssystems (1),** wobei das Beleuchtungssystem (1) einen Steuerbus (8) zum Anschluss einer Mehrzahl der Geräte (2, 3, 4, 5, 16, 17) umfasst und mindestens ein Gerät (3, 16, 17) eine Busspannungsversorgung zur Versorgung des Steuerbusses (8) aufweist; wobei das Beleuchtungssystem (1) die Aktualisierung der Firmware der Geräte (2, 3, 4, 5, 16, 17) über den Steuerbus (8) ausführt; und das Verfahren folgende Schritte umfasst:
- Erfassen von Informationen über die mindestens eine Busspannungsversorgung von der Mehrzahl von Geräten (2, 3, 4, 5, 16, 17) über den Steuerbus (8);
- Auswählen von Geräten (2, 3, 4, 5, 16, 17) aus der Mehrzahl der Geräte (2, 3, 4, 5, 16, 17) basierend auf den erfassten Informationen, **wobei** die ausgewählten Geräte (2, 3, 4, 5, 16, 17) mindestens eines der Geräte (2, 3, 4, 5, 16, 17) aus der Mehrzahl der Geräte (2, 3, 4, 5, 16, 17) ausschließen, das die Busspannungsversorgung aufweist, welche einen Versorgungsstrom an den Steuerbus (8) liefert;
- Aktualisieren der Firmware der ausgewählten Geräte (2, 3, 4, 5, 16, 17) aus der Mehrzahl der Geräte (2, 3, 4, 5, 16, 17).

2. **Verfahren zum Aktualisieren der Firmware nach Anspruch 1, wobei** über den Steuerbus (8) die Busspannungsversorgung von Geräten (3, 16, 17) aus der Mehrzahl von Geräten (2, 3, 4, 5, 16, 17) selektiv zwischen einem Zustand, in dem die Busspannungsversorgung aktiviert ist, um einen Versorgungsstrom an den Steuerbus (8) abzugeben, und einem Zustand, in dem die Busspannungsversorgung deaktiviert ist, geschaltet wird.

3. **Verfahren zum Aktualisieren der Firmware nach Anspruch 1 oder 2, wobei** das Erfassen der Informationen über die mindestens eine Busspannungsversorgung von der Mehrzahl der Geräte (2, 3, 4, 5, 16, 17) Informationen über mindestens eine der folgenden Eigenschaften umfasst: das Vorhandensein, den Betriebszustand und die aktuelle Ausgangsleistung der mindestens einen Busspannungsversorgung.

4. **Verfahren zum Aktualisieren der Firmware nach einem der vorhergehenden Ansprüche,** umfassend ferner die Schritte:
- Bestimmen eines Unterschieds zwischen der Anzahl der ausgewählten Geräte (2, 3, 4, 5, 16, 17) und der Anzahl von der Mehrzahl der Geräte (2, 3, 4, 5, 16, 17), basierend auf den erfassten Informationen über die mindestens eine Busspannungsversorgung; **und**
- falls der bestimmte Unterschied eins oder weniger beträgt, Generieren einer Information, mit der der Einsatz einer externen Stromversorgungseinrichtung für den Steuerbus (8) angefordert wird, **und** Ausgeben der generierten Information über eine Mensch-Maschine-Schnittstelle (19) an einen Benutzer.

5. **Verfahren zum Aktualisieren der Firmware nach einem der vorhergehenden Ansprüche,** umfassend ferner die Schritte:
- Bestimmen einer gesamten Ausgangsleistung der Geräte (2, 3, 4, 5, 16, 17) aus der Mehrzahl der Geräte (2, 3, 4, 5, 16, 17) unter Ausschluss der ausgewählten Geräte (2, 3, 4, 5, 16, 17), basierend auf den erfassten Informationen über die mindestens eine Busspannungsversorgung; **und**
- falls die bestimmte gesamte Ausgangsleistung kleiner ist als eine vorgegebene Mindestleistung, Generieren einer Information, mit der der Einsatz einer externen Stromversorgungseinrichtung für den Steuerbus (8) angefordert wird, **und** Ausgeben der generierten Information über eine Mensch-Maschine-Schnittstelle (19) an einen Benutzer.

6. **Verfahren zum Aktualisieren der Firmware nach einem der vorhergehenden Ansprüche, wobei** das Auswählen der Geräte (2, 3, 4, 5, 16, 17) aus der Mehrzahl der Geräte (2, 3, 4, 5, 16, 17) basierend auf den erfassten Informationen Folgendes umfasst:
- Bilden einer ersten Gruppe ausgewählter Geräte (2, 3, 4, 5, 16, 17) und mindestens einer zweiten Gruppe ausgewählter Geräte (2, 3, 4, 5, 16, 17) basierend auf den erfassten Informationen, **wobei** jede der ersten und der mindestens einen zweiten Gruppen ausgewählter Geräte mindestens ein Gerät (2, 16, 17) umfasst, das die Busspannungsversorgung aufweist, **und wobei** jede der ersten und der mindestens einen zweiten Gruppen ausgewählter Geräte (2, 3, 4, 5, 16, 17) mindestens eines der Geräte (2, 16, 17) aus der Mehrzahl der Geräte (2, 3, 4, 5, 16, 17) ausschließt, das die Busspannungsversorgung aufweist; **und** die Firmware der ersten Gruppe ausgewählter Geräte (2, 3, 4, 5, 16, 17) und der mindestens einen zweiten Gruppe ausgewählter Geräte (2, 3, 4, 5, 16, 17) aus der Mehrzahl der Geräte (2, 3, 4, 5, 16, 17) nacheinander zeitlich aktualisiert wird.

7. **Verfahren zum Aktualisieren der Firmware nach Anspruch 6,** umfassend ferner das **selektive Schalten** der Busspannungsversorgung der ausgewählten Geräte (2, 3, 4, 5, 16, 17) der ersten Gruppe und der mindestens einen zweiten Gruppe von ausgewählten Geräte (2, 3, 4, 5, 16, 17) in einen aktivierten Zustand und einen deaktivierten Zustand über den Steuerbus (8), um das nacheinander ablaufende Aktualisieren der Firmware der ersten Gruppe von ausgewählten Geräte (2, 3, 4, 5, 16, 17) und der mindestens einen zweiten Gruppe von ausgewählten Geräte (2, 3, 4, 5, 16, 17) zu steuern.

8. **Verfahren zum Aktualisieren der Firmware nach einem der vorhergehenden Ansprüche,** umfassend ferner das **Bestimmen,** basierend auf den Informationen über die mindestens eine Busspannungsversorgung, **ob** ein von der mindestens einen Busspannungsversorgung abgegebener elektrischer Strom den für den Steuerbus (8) spezifizierten Maximalstrom überschreitet.

9. **Verfahren zum Aktualisieren der Firmware nach Anspruch 8, wobei** die Informationen über die mindestens eine Busspannungsversorgung Informationen über die Anzahl der Busspannungsversorgungen des Beleuchtungssystems (1) und über einen von einzelnen Busspannungsversorgungen abgegebenen elektrischen Strom umfassen.

10. **Verfahren zum Aktualisieren der Firmware nach Anspruch 8 oder 9, wobei** das Erfassen der Informationen über die mindestens eine Busspannungsversorgung über den Steuerbus (8) das Erfassen von Informationen über eine maximale Leistung oder einen maximalen Strom umfasst, die von einzelnen Busspannungsversorgungen abgegeben werden.

11. **Verfahren zum Aktualisieren der Firmware nach einem der vorhergehenden Ansprüche, wobei** die von der Mehrzahl der Geräte (2, 3, 4, 5, 16, 17) erfassten Informationen über die mindestens eine Busspannungsversorgung Identifikationsinformationen zu einem Typ von mindestens einem einzelnen Gerät (2, 3, 4, 5, 16, 17) aus der Mehrzahl der Geräte (2, 3, 4, 5, 16, 17) und zu der mindestens einen Busspannungsversorgung umfassen; **und** das Verfahren das Zuordnen der erfassten Identifikationsinformationen zu in einer Nachschlagetabelle gespeicherten Informationen über den Typ des mindestens einen einzelnen Geräts (2, 3, 4, 5, 16, 17) aus der Mehrzahl der Geräte (2, 3, 4, 5, 16, 17) und der mindestens einen Busspannungsversorgung umfasst.

12. **Verfahren zum Aktualisieren der Firmware nach einem der vorhergehenden Ansprüche, wobei** die Mehrzahl der Geräte (2, 3, 4, 5, 16, 17) mehrere Lichttreibergeräte (3,4,5,12,17) umfasst, die jeweils eine Steuerbus-Schnittstelle (9, 10) enthalten, **und wobei** mindestens eine Steuerbus-Schnittstelle (10) der mehreren Lichttreibergeräte (3, 4, 5, 16, 17) die mindestens eine Busspannungsversorgung umfasst.

13. **Verfahren zum Aktualisieren der Firmware nach einem der vorhergehenden Ansprüche, wobei** der Steuerbus (8) ein **Beleuchtungssteuerbus** gemäß mindestens einem Standard der DALI-Serie ist.

14. **Computerprogramm** mit Anweisungen, die, wenn das Programm von einem Computer (18) ausgeführt wird, den Computer (18) veranlassen, das Verfahren nach einem der vorhergehenden Ansprüche auszuführen.

15. **Computerlesbares Speichermedium,** auf dem das Computerprogramm nach Anspruch 14 gespeichert ist.

## Revendications

1. **Procédé de mise à jour du micrologiciel de dispositifs (2, 3, 4, 5, 16, 17) d'un système d'éclairage (1),** dans lequel le système d'éclairage (1) comprend un bus de commande (8) connectant une pluralité desdits dispositifs (2, 3, 4, 5, 16, 17), et au moins un dispositif (3, 16, 17) comporte une alimentation de bus servant à alimenter le bus de commande (8); dans lequel le système d'éclairage (1) effectue la mise à jour du micrologiciel des dispositifs (2, 3, 4, 5, 16, 17) via le bus de commande (8); et le procédé comprend les étapes suivantes :
- acquisition, via le bus de commande (8), d'informations relatives à ladite au moins une alimentation de bus auprès de ladite pluralité de dispositifs (2, 3, 4, 5, 16, 17);
- sélection de dispositifs (2, 3, 4, 5, 16, 17) parmi ladite pluralité de dispositifs (2, 3, 4, 5, 16, 17) en fonction des informations acquises, **lesdits dispositifs sélectionnés excluant au moins l'un des dispositifs** (2, 3, 4, 5, 16, 17) **de ladite pluralité comportant l'alimentation de bus fournissant un courant d'alimentation audit bus de commande (8);**
- mise à jour du micrologiciel des dispositifs sélectionnés (2, 3, 4, 5, 16, 17) de ladite pluralité de dispositifs.

2. **Procédé selon la revendication 1,** dans lequel le procédé comprend **de commuter de manière sélective,** via le bus de commande (8), **l'alimentation de bus** des dispositifs (3, 16, 17) de ladite pluralité de dispositifs (2, 3, 4, 5, 16, 17) **entre un état** dans lequel l'alimentation de bus est activée pour fournir un courant d'alimentation au bus de commande (8) **et un état** dans lequel l'alimentation de bus est désactivée.

3. **Procédé selon la revendication 1 ou 2,** dans lequel l'acquisition d'informations sur ladite au moins une alimentation de bus auprès de la pluralité de dispositifs (2, 3, 4, 5, 16, 17) comprend des informations concernant au moins l'une des caractéristiques suivantes : la présence de ladite alimentation de bus, son état, et sa puissance de sortie actuelle.

4. **Procédé selon l'une quelconque des revendications précédentes,** comprenant en outre les étapes de :
- déterminer une différence entre le nombre de dispositifs sélectionnés (2, 3, 4, 5, 16, 17) et le nombre de dispositifs (2, 3, 4, 5, 16, 17) de ladite pluralité, sur la base des informations acquises concernant ladite au moins une alimentation de bus; **et**
- dans le cas où la différence déterminée est inférieure ou égale à un, générer des informations demandant l'utilisation d'une source d'alimentation externe pour le bus de commande (8) **et** fournir lesdites informations générées à un utilisateur via une interface homme-machine (19).

5. **Procédé selon l'une quelconque des revendications précédentes,** comprenant en outre les étapes de :
- déterminer une puissance de sortie totale des dispositifs (2, 3, 4, 5, 16, 17) de ladite pluralité à l'exclusion des dispositifs sélectionnés (2, 3, 4, 5, 16, 17), sur la base des informations acquises concernant ladite au moins une alimentation de bus; **et**
- dans le cas où la puissance de sortie totale déterminée est inférieure à une puissance minimale prédéterminée, générer des informations demandant l'utilisation d'une source d'alimentation externe pour le bus de commande (8) **et** fournir lesdites informations générées à un utilisateur via une interface homme-machine (19).

6. **Procédé selon l'une quelconque des revendications précédentes,** dans lequel la sélection des dispositifs (2, 3, 4, 5, 16, 17) de ladite pluralité en fonction des informations acquises comprend :
- la formation d'un premier groupe de dispositifs sélectionnés (2, 3, 4, 5, 16, 17) et d'au moins un second groupe de dispositifs sélectionnés (2, 3, 4, 5, 16, 17) sur la base des informations acquises, **chaque** groupe (le premier groupe comme chaque second groupe) de dispositifs sélectionnés **comprenant** au moins un dispositif (3, 16, 17) comportant l'alimentation de bus, **et chaque** groupe (le premier groupe comme chaque second groupe) de dispositifs sélectionnés **excluant** au moins un des dispositifs (3, 16, 17) de ladite pluralité comportant l'alimentation de bus; **le procédé étant tel que** la mise à jour du micrologiciel du premier groupe de dispositifs sélectionnés et du ou des seconds groupes de dispositifs sélectionnés est effectuée successivement dans le temps.

7. **Procédé selon la revendication 6,** comprenant en outre de **commuter de manière sélective** l'alimentation de bus des dispositifs sélectionnés (2, 3, 4, 5, 16, 17) du premier groupe et du ou des seconds groupes de dispositifs sélectionnés dans un état activé et un état désactivé via le bus de commande (8), afin de piloter la mise à jour séquentielle du micrologiciel du premier groupe de dispositifs sélectionnés et du ou des seconds groupes de dispositifs sélectionnés.

8. **Procédé selon l'une quelconque des revendications précédentes,** comprenant en outre de **déterminer,** sur la base des informations relatives à ladite au moins une alimentation de bus, **si** un courant électrique fourni par ladite au moins une alimentation de bus dépasse le courant maximal spécifié pour le bus de commande (8).

9. **Procédé selon la revendication 8,** dans lequel les informations relatives à ladite au moins une alimentation de bus comprennent des informations sur le nombre d'alimentations de bus du système d'éclairage (1) et sur un courant électrique délivré par chaque alimentation de bus.

10. **Procédé selon la revendication 8 ou 9,** dans lequel l'acquisition d'informations sur ladite au moins une alimentation de bus via le bus de commande (8) comprend l'acquisition d'informations sur une puissance maximale ou un courant maximal fournis par chaque alimentation de bus.

11. **Procédé selon l'une quelconque des revendications précédentes,** dans lequel les informations concernant ladite au moins une alimentation de bus obtenues de la part de la pluralité de dispositifs (3, 16, 17) comprennent des informations d'identification d'un type de l'un au moins des dispositifs individuels (2, 3, 4, 5, 16, 17) de ladite pluralité et de ladite au moins une alimentation de bus; **le procédé comprenant** l'association des informations d'identification acquises avec des informations correspondant à ce type de dispositif individuel (2, 3, 4, 5, 16, 17) et à ladite au moins une alimentation de bus, stockées dans une table de correspondance.

12. **Procédé selon l'une quelconque des revendications précédentes,** dans lequel la pluralité de dispositifs (2, 3, 4, 5, 16, 17) comprend une pluralité de dispositifs (3, 4, 5, 16, 17) d'alimentation de lampes, chacun muni d'une interface de bus de commande (9, 10), **et dans lequel** au moins une interface de bus de commande (10) de ladite pluralité de dispositifs d'alimentation de lampes (3, 4, 5, 16, 17) comprend ladite au moins une alimentation de bus.

13. **Procédé selon l'une quelconque des revendications précédentes,** dans lequel le bus de commande (8) est un bus de commande d'éclairage conformément à au moins une norme de la série DALI.

14. **Programme d'ordinateur** comprenant des instructions qui, lorsqu'elles sont exécutées par un ordinateur (18), amènent celui-ci à exécuter le procédé selon l'une quelconque des revendications précédentes.

15. **Support de stockage lisible par un ordinateur** sur lequel est stocké le programme d'ordinateur selon la revendication 14.
